# EUROPÄISCHE PATENTANMELDUNG

(11) **EP 0 640 788 A2**
(43) Veröffentlichungstag der Anmeldung: **01.03.1995**
(21) Anmeldenummer: 94109152.2
(22) Anmeldetag: 15.06.1994
(51) Int. Cl.: F16L 59/153, F16L 11/22

(54) **Begleitkühlschlauch für Getränke-Schankleitungen**

(30) Priorität: 31.08.1993 DE 9313076 U
(71) Anmelder: THEKA GmbH, Theken-Kühlung-Armaturen Handelsgesellschaft, D-07548 Gera (DE)
(72) Erfinder: Kall, Hans Achim, D-42853 Remscheid (DE)
(74) Vertreter: Zapf, Christoph, Dipl.-Ing.

(57) **Zusammenfassung**

Begleitkühlschlauch (1) für Getränke-Schankleitungen, bestehend aus einem inneren Schlauchbündel (2) und einer das Schlauchbündel (2) umschließenden Wärmeisolierung (5) aus geschlossenpohrigem Zellkautschuk (Moosgummi) sowie aus einer die Wärmeisolierung (5) umgebenden Kunststoffhülle (8). Die Wärmeisolierung (5) besteht aus zwei übereinanderliegenden Lagen (6, 7) aus Zellkautschuk-Bändern.

## Beschreibung

Die vorliegende Erfindung betrifft einen Begleitkühlschlauch für Getränke-Schankleitungen, bestehend aus einem inneren Schlauchbündel und einer das Schlauchbündel umschließenden Wärmeisolierung aus geschlossenporigem Zellkautschuk (Moosgummi) sowie einer die Wärmeisolierung umgebenden Kunststoffhülle.

Ein derartiger Begleitkühlschlauch ist bereits bekannt. Hierbei besteht die Wärmeisolierung aus vorgefertigten, aneinander gesetzten, insbesondere aneinandergeklebten Moosgummi-Schlauchstücken, in die nachträglich das Schlauchbündel eingezogen wird, indem der Moosgummi-Schlauch mit einem Druckmedium beim Einziehen geweitet wird. Diese Fertigungstechnik ist relativ kostenaufwendig. Zudem ist die Fertigungslänge des Begleitkühlschlauches begrenzt.

Der Erfindung liegt die Aufgabe zugrunde, einen Begleitkühlschlauch zu schaffen, der bei gleichen mechanischen und wärmetechnischen Eigenschaften, wie die bekannten Begleitkühlschläuche, kostengünstiger in beliebigen Längen herstellbar ist.

Erfindungsgemäß wird dies dadurch erreicht, das die Wärmeisolierung aus zwei übereinanderliegenden Lagen aus Zellkautschuk-Bändern besteht. Diese Bänder werden vorzugsweise in zwei Lagen gegensinnig über Kreuz gewickelt. Dies kann in einem kontinuierlichen Fertigungsprozeß geschehen, wobei um das Schlauchbündel zwei Wickelvorrichtungen gegensinnig rotieren, sowie das Schlauchbündel kontinuierlich von einer Trommel abgezogen und auf eine zweite Trommmel aufgewickelt wird. Vorteilhafterweise sind die Zellkautschuk-Bänder etwa 60 mm breit und haben eine Dicke von ca. 10 mm. Dabei kann das Aufwickeln der Zellkautschuk-Bänder unter leichtem Zug erfolgen, so daß im Spaltbereich durch die auftretende Querverformung eine Spaltabdichtung erfolgt.

Weitere vorteilhafte Ausführungen der Erfindung sind in den Unteransprüchen enthalten. Anhand des in den beiliegenden Zeichnungen dargestellten Ausführungsbeispiels wird die Erfindung näher erläutert. Es zeigen:
- Fig. 1: einen Querschnitt eines erfindungsgemäßen Begleitkühlschlauches,
- Fig. 2: eine Aufsicht auf einen erfindungsgemäßen Begleitkühlschlauch mit teilweise entfernter äußerer Hülle und äußerer Bandlage.

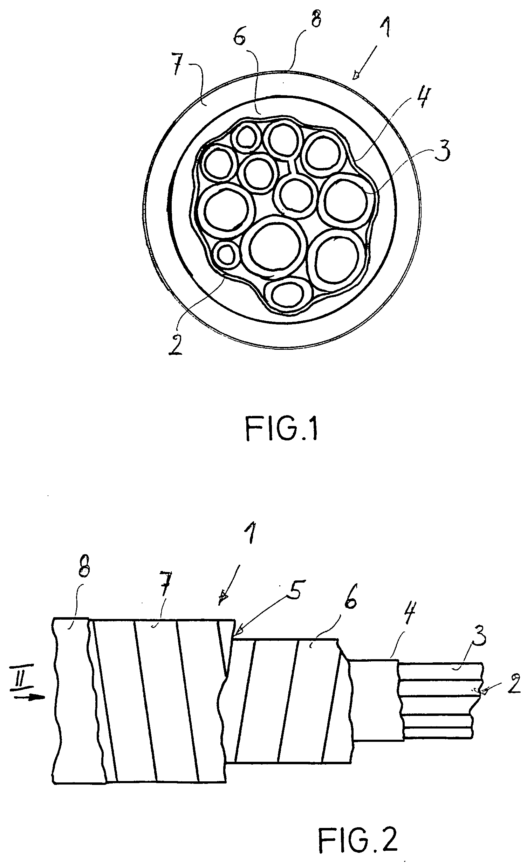

Wie sich aus Fig. 1 ergibt, besitzt ein erfindungsgemäßer Begleitkühlschlauch 1 ein inneres zentrisches Schlauchbündel 2. Dieses Schlauchbündel 2 weist mehrere parallel zueinander verlaufende Schläuche 3 auf, die unterschiedliche Durchmesser haben können. Es liegt ebenfalls im Rahmen der Erfindung, wenn neben einzelnen Schläuchen 3 auch elektrische Leitungen innerhalb des Schlauchbündels 2 verlaufen. Die einzelnen Schläuche 3 bestehen vorzugsweise aus Polyamid oder Polyäthylen. Das Schlauchbündel 2 wird vorzugsweise von einer Hülle 4 umgeben, die aus einer Aluminium-kaschierten Klebefolie besteht, die in das Schlauchbündel 2 gewickelt ist, und zwar spaltfrei überlappend. Hierbei ist die Aluminium-Kaschierung auf der Außenseite der Hülle 4. Diese Hülle 4 dient einerseits als mechanischer Halt des Schlauchbündels 2 und andererseits als Diffusionssperre. Gleichzeitig hat diese Hülle 4 auch isolierende Eigenschaften. Die Hülle 4 wird von einer Wärmeisolierung 5 umgeben. Diese Wärmeisolierung 5 besteht aus zwei übereinander angeordneten Lagen 6, 7, die jeweils aus aufgewickelten Zellkautschuk-Bändern gebildet werden. Hierbei sind die Bänder beider Lagen 6, 7 gegensinnig über Kreuz gewickelt, so daß eine optimale Wärmeisolierung erreicht wird, da weitgehend durchgängige Spalten vermieden werden. Zweckmäßigerweise können die Bänder jeder Lage mit einer selbstklebenden Beschichtung auf ihrer Unterseite versehen sein. In Ausgestaltung der Erfindung können in den Zellkautschuk-Bänder Zugentlastungsbänder integriert sein. Die Zellkautschuk-Bänder sind vorzugsweise 60 mm breit und haben eine Dicke von vorzugsweise 10 mm. Die äußere Lage 7 wird von einer Kunststoffhülle 8 umgeben. Diese Kunststoffhülle 8 stellt eine Abschlußbandagierung dar und wird von einem selbstklebenden Band aus Kunststoff gebildet, das ebenfalls spaltfrei überlappend gewickelt ist. Die äußere Hülle 8 dient insbesondere als mechanischer Schutz.

Die erfindungsgemäße Ausgestaltung des Begleitkühlschlauches 1 ermöglicht eine kontinuierliche Fertigung des Schlauches in beliebiger Länge.

## Patentansprüche

1. Begleitkühlschlauch für Getränke-Schankleitungen, bestehend aus einem inneren Schlauchbündel und einer das Schlauchbündel umschließenden Wärmeisolierung aus geschlossenpohrigem Zellkautschuk (Moosgummi) sowie einer die Wärmeisolierung umgebenden Kunststoffhülle, **dadurch gekennzeichnet,** daß die Wärmeisolierung (5) aus zwei übereinanderliegenden Lagen (6, 7) aus Zellkautschuk-Bändern besteht.

2. Begleitkühlschlauch nach Anspruch 1,
**dadurch gekennzeichnet,** daß die Bänder der beiden Lagen (6, 7) gegensinnig, über Kreuz gewickelt sind.

3. Begleitkühlschlauch nach Anspruch 1 oder 2, **dadurch gekennzeichnet,** daß die Bänder ca. 60 mm breit und ca. 10 mm dick ausgebildet sind.

4. Begleitkühlschlauch nach den Ansprüchen 1 bis 3, **dadurch gekennzeichnet,** daß die Bänder vorzugsweise unter Zugvorspannung stumpf aneinanderstoßend gewickelt sind.

5. Begleitkühlschlauch nach einem der Ansprüche 1 bis 4, **dadurch gekennzeichnet,** daß in den Bändern der Lagen (6, 7) ein Zugentlastungsband integriert ist.

6. Begleitkühlschlauch nach einem der Ansprüche 1 bis 5, **dadurch gekennzeichnet,** daß zwischen dem Schlauchbündel (2) und der Wärmeisolierung (5) eine Aluminium-kaschierte Klebefolie als das Schlauchbündel (2) umgebende Hülle (4) angeordnet ist.

7. Begleitkühlschlauch nach einem der Ansprüche 1 bis 6, **dadurch gekennzeichnet,** daß die äußere Kunststoffhülle (8) aus einer spaltfrei übereinanderlappend gewickelten, selbstklebenden Kunststoffband besteht.
